Europäisches Patentamt

European Patent Office

Office européen des brevets

(19)

(11) **EP 1 058 138 A1**

(12) ## DEMANDE DE BREVET EUROPEEN

(43) Date de publication:
**06.12.2000 Bulletin 2000/49**

(51) Int Cl.⁷: **G02B 6/293**

(21) Numéro de dépôt: **00401555.8**

(22) Date de dépôt: **31.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **04.06.1999 FR 9907058**

(71) Demandeur: **ALCATEL**
**75008 Paris (FR)**

(72) Inventeurs:
• **Lupu, Anatolie**
 **94230 Cachan (FR)**
• **Carenco, Alain**
 **94230 Cachan (FR)**

(74) Mandataire: **Ballot, Paul**
 **Cabinet Ballot-Schmit,**
 **16, Avenue du Pont Royal**
 **94230 Cachan (FR)**

(54) **Multiplexeur/démultiplexeur optique à trois guides d'onde**

(57) L'invention concerne un multiplexeur/démultiplexeur optique apte à combiner et/ou à séparer au moins deux signaux optiques parmi n se propageant à différentes longueurs d'onde, caractérisé en ce qu'il comprend au moins un guide d'onde central (4) et deux guides d'onde latéraux (5, 6), chaque guide d'onde latéral constituant avec le guide central une paire de guide d'onde, chaque paire étant disposée de manière à permettre un couplage évanescent bidirectionnel d'une longueur d'onde associée entre les guides de chaque paire (4, 5) et (4, 6), le couplage étant sélectif en longueur d'onde et assisté par au moins un réseau gravé (Λ), lesdits guides d'onde étant conçus pour que le multiplexeur/démultiplexeur présente un fonctionnement indépendant de l'état de polarisation des signaux.

La présente invention s'applique aux filtres optiques et/ou aux réseaux d'accès direct pour une communication bidirectionnelle dans la fenêtre à 1.3± μm simultanée à une distribution vidéo à 1.5 μm.

Fig. 6

## Description

La présente invention se situe dans le domaine général de l'optoélectronique, et concerne plus précisément un multiplexeur/démultiplexeur optique.

La présente invention se rapporte à un multiplexeur/démultiplexeur comportant au moins trois guides d'onde, chaque paire de guides d'onde constituant des coupleurs distincts assistés par réseau de manière à coupler respectivement au moins deux longueurs d'onde prédéterminées.

Le multiplexeur/démultiplexeur selon l'invention peut être utilisé dans une application de multiplexage et/ou démultiplexage d'au moins trois longueurs d'onde se propageant dans trois fenêtres de transmission différentes quelles que soit les valeurs numériques de ces dernières.

Un tel multiplexeur/démultiplexeur peut également être utilisé dans une application de filtrage optique, le premier coupleur permettant de filtrer une longueur d'onde donnée et le second coupleur, dit fictif, servant de sortie de rejet d'une autre longueur d'onde, proche de la première, de manière à affiner la réponse spectrale (ou fonction de transfert) du premier coupleur.

La présente invention trouve tout particulièrement une application dans le domaine des réseaux de distribution par fibres optiques à accès direct chez l'abonné. En effet, dans le domaine de la télécommunication optique, la notion de « fibre jusque chez l'abonné », ou FTTH pour « Fiber To The Home » en anglais, est devenue un point essentiel du développement pour les opérateurs désireux de satisfaire les besoins sans cesse grandissants de leurs clients.

De tels réseaux de distributions sont déjà largement exploités et utilisent principalement des fibres optiques dans lesquelles se propagent des signaux optiques dans différentes fenêtres de transmission.

Les signaux optiques sont reçus et transmis, et multiplexés et démultiplexés par des modules optiques.

Généralement, le cas le plus usité est d'utiliser deux fenêtres de transmission, une première fenêtre à 1.3 μm pour les communications vocales, et une autre fenêtre à 1.5 μm pour la distribution vidéo.

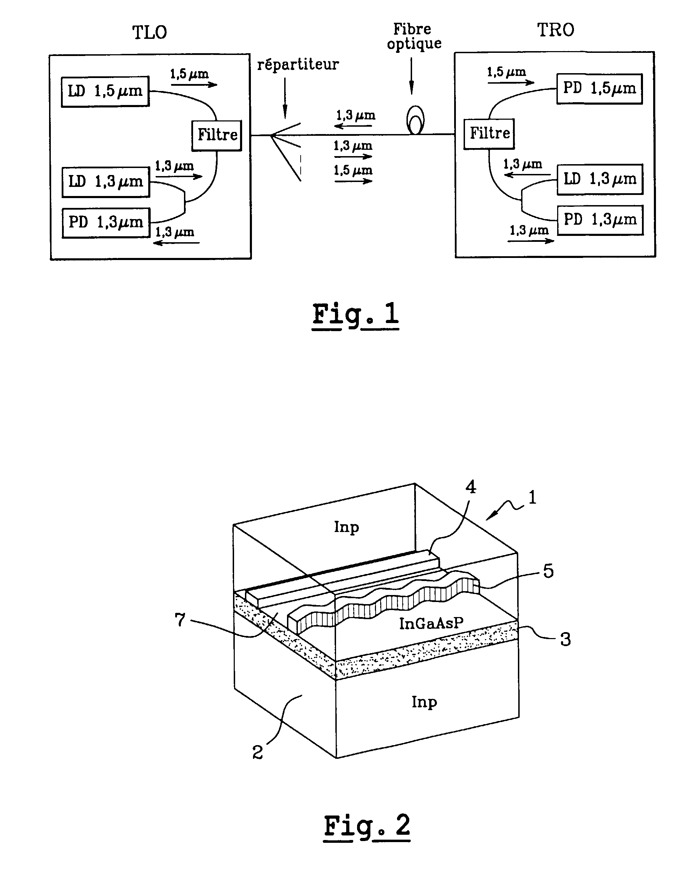

La figure 1 est un diagramme schématique illustrant le principe de la télécommunication optique par FTTH.

Un Terminal de Ligne Optique (TLO), ou Optical Line Terminal (OLT) en terminologie anglaise, assure la communication entre les différents clients à travers un répartiteur de fibres optiques.

Chaque client est équipé d'un Terminal de Réception Optique (TRO), ou Optical Network Unit (ONU) en terminologie anglaise.

Les deux modules optiques, le TLO et le TRO, sont avantageusement identiques de par leur conception. Des diodes lasers (LD) sont utilisées pour émettre un signal optique à une longueur d'onde donnée, telle que 1.3 μm ou 1.5 μm, et des photodiodes (PD) permettent la réception desdits signaux optiques.

Les différentes longueurs d'onde sont multiplexées ou démultiplexées en deux étapes. Tout d'abord, un filtre permet de séparer les deux longueurs d'onde utilisées et transmises par fibres optiques, puis un coupleur permet de dissocier les entrées et les sorties d'une même fenêtre de transmission.

Dans l'exemple illustré, la fenêtre à 1.3 μm est utilisée en voie montante et en voie descendante pour une communication vocale dite en « half duplex », c'est à dire que des interférences peuvent intervenir entre les signaux se propageant du TLO vers le TRO, et du TRO vers le TLO, la fenêtre à 1.5 μm étant réservée pour la distribution vidéo dans une voie descendante seulement.

Il existe d'autres modes de réalisation permettant d'obtenir une communication vocale en « full duplex », c'est à dire sans interférences, en utilisant par exemple la fenêtre à 1.3 μm pour la voie montante et la fenêtre à 1.5 μm pour la voie descendante. Ce mode de réalisation doit cependant abandonner la distribution vidéo.

La présente invention cherche à réaliser un transmetteur optique qui permette une communication vocale en « full duplex », c'est à dire sur deux longueurs d'ondes différentes pour les voies montante et descendante, tout en maintenant la distribution vidéo descendante.

A cet effet, l'invention propose d'utiliser une première fenêtre de transmission à 1.3 μm permettant une communication simultanée bidirectionnelle sur deux longueurs d'onde différentes, à 1.3- μm et 1.3+ μm, et une autre fenêtre de transmission à 1.5 μm à haut débit pour une distribution vidéo simultanée à la communication vocale.

Jusqu'à présent, les longueurs d'ondes à 1.3 μm et 1.5 μm étaient, en général, séparées par un filtre sur deux guides d'ondes. La fonction de filtrage pouvait être assurée soit par des composants hybrides munis d'un miroir diélectrique adapté, soit par des composants optiques intégrés tel qu'un interféromètre Mach-Zehnder.

Le guide d'onde à 1.3 μm était alors séparé en deux ports consistant en une entrée et une sortie, soit par une jonction Y classique, soit par un coupleur à 3 dB.

Une telle méthode de transmission comporte néanmoins de nombreux inconvénients.

En effet, la séparation entre l'entrée et la sortie de l'onde à 1.3 μm introduit systématiquement une perte de 3 dB.

En outre, un effet « ping pong » est introduit dans le canal de communication vocale du fait que les transmissions montantes et descendantes utilisent la même fenêtre à 1.3 μm.

De plus, la transmission sur le canal à 1.3 μm est de faible débit, typiquement de quelques dizaines de Méga Octets par secondes.

La présente invention cherche ainsi à réaliser un multiplexeur/démultiplexeur bidirectionnel à trois longueurs d'onde qui permette d'une part une communication simultanée bidirectionnelle sur deux longueurs d'onde différentes, et d'autre part une distribution sur une autre longueur d'onde.

Dans le cadre d'une application aux réseaux d'accès directs, la présente invention propose d'utiliser deux longueurs d'onde différentes pour une communication bidirectionnelle dans la même fenêtre à 1.3 $\mu$m, par exemple 1.28 $\mu$m et 1.32 $\mu$m, et de les séparer par un filtre isotropique à bande passante unique afin de ne pas perturber la transmission de l'onde optique à 1.5 $\mu$m.

Ainsi, un autre problème que cherche à résoudre l'invention est de parvenir à réaliser un filtre optique permettant de séparer des signaux se propageant à des longueurs d'onde proches les unes des autres (par exemple 1.28 $\mu$m et 1.32 $\mu$m).

Le brevet français N°2 732 478 décrit une méthode de filtrage de deux longueurs d'onde par un coupleur co-directionnel. Une telle méthode est illustrée sur la figure 2.

Ce brevet décrit une structure à deux guides d'ondes optiques comportant une couche de confinement inférieure 2, un coeur 3 de guidage de la lumière et deux rubans 4 et 5 pour charger le coeur et former les guides optiques. Une telle structure convient pour réaliser un filtre, un réseau de couplage étant gravé sur l'un des rubans 5.

Avec un tel filtre, lorsque la lumière se propage dans un guide d'onde, toutes les longueurs d'onde sauf celle du filtre traversent le guide dans le canal direct, alors que la longueur d'onde choisie est transférée dans le canal latéral dans le guide d'onde parallèle couplé.

Selon une particularité de l'invention décrite dans ce brevet, les épaisseurs du coeur et des rubans sont définies de manière à ce que les deux guides optiques aient la même biréfringence modale. Le coeur et les rubans comportent en effet une succession de couches minces alternées respectivement en matériau binaire et en matériau quaternaire.

Ainsi, un coupleur asymétrique co-directionnel permet de séparer une longueur d'onde donnée $\lambda_0$, fixée par la perturbation périodique $\Lambda$ gravée sur l'un des rubans, les autres longueurs d'onde se propageant dans l'autre guide d'onde quel que soit l'état de polarisation des signaux.

La présente invention cherche à réaliser un filtre optique qui permette d'extraire une longueur d'onde donnée $\lambda_0$, le coupleur constituant ce filtre présentant une réponse spectacle avec un taux de réjection élevé et une bande passante étroite. En effet, l'efficacité d'un filtre optique est généralement limitée par l'importance des lobes secondaires de sa fonction de transfert.

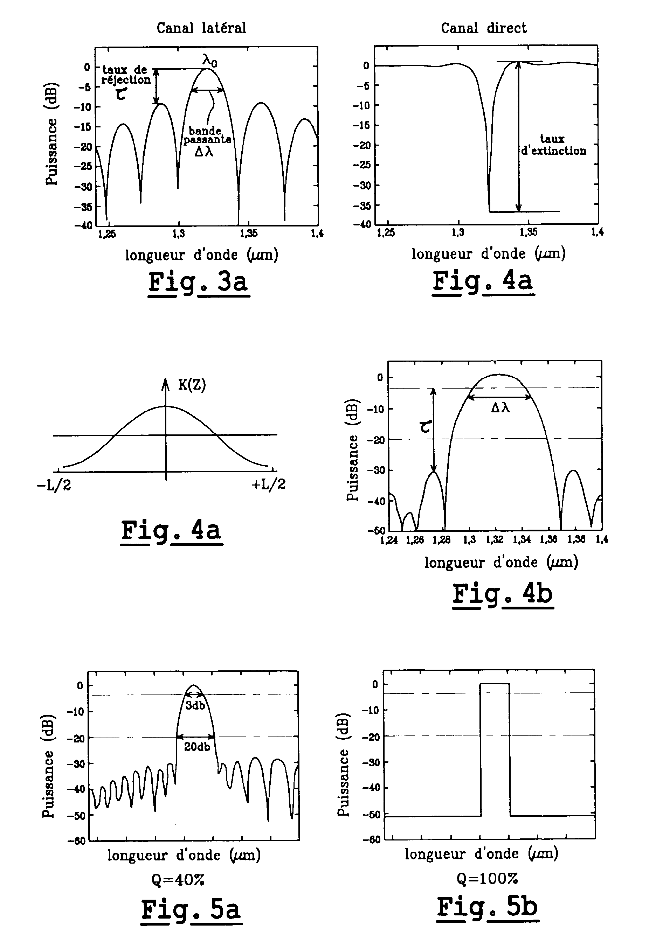

Les figures 3a et 3b illustrent les réponses spectrales respectivement selon le canal latéral et selon le canal direct d'un filtre optique classique constitué d'un coupleur optique tel que celui décrit en référence à la figure 2. On constate que la bande passante $\Delta\lambda$ à $\lambda_0$ est relativement large et que le taux de réjection $\tau$ est faible. Un tel coupleur ne peut donc pas être utilisé pour filtrer un signal à une longueur d'onde donnée $\lambda_0$ se propageant avec d'autre signaux à des longueurs d'onde proches.

Différentes solutions ont été proposées dans l'art antérieur pour supprimer ou réduire les lobes secondaires de la réponse spectrale d'un filtre optique. Une telle opération est connue sous le terme « d'apodisation » de la fonction de transfert du filtre.

Une solution particulière consiste à réaliser un couplage évanescent progressif. Par exemple, on peut réaliser un profil de couplage tel que celui illustré sur la figure 4a en réalisant des guides d'onde courbés (le profil de la figure 4a est connu sous le nom anglais de generalized cosine profile). Un tel profil de couplage k(z) consiste à faire varier la distance séparant les guides d'onde du coupleur (selon l'axe z) sur toute la longueur L du filtre, le couplage étant maximum au centre du filtre.

La figure 4b représente la fonction de transfert obtenue par un tel coupleur progressif. On remarque qu'un taux de réjection $\tau$ d'environ 30 dB a pu être atteint. En revanche, la largeur du lobe principal $\Delta\lambda$ a été augmenté, ce qui est un désavantage dans le cas d'un filtre optique devant séparer des longueurs d'onde proches les unes des autres.

On peut envisager des profils de couplage différents de celui illustré sur la figure 4a, mais cela rend la conception de filtre encore plus complexe, ou introduit d'autres désavantages, comme une longueur de filtre multipliée par deux pour un profil de couplage dit « box-like » par exemple procurant un gabarit de forme carrée.

On introduit à cet effet un coefficient de qualité Q qui représente le rapport de la largeur du lobe principal à -3dB et sa largeur à -20dB : $Q = \Delta\lambda_{-3dB}/\Delta\lambda_{-20dB}$

Les figures 5a et 5b illustrent des réponses spectrales simulées de filtre optique pour des coefficients de qualité Q respectif de 40% et 100%.

La présente invention cherche donc à réaliser un filtre optique dont la réponse spectrale se rapproche au plus de la fonction idéale d'apodisation (fonction dans laquelle les lobes secondaires ont disparu et dont le lobe principal est étroit).

La présente invention a donc pour premier objectif de réaliser une fonction de multiplexage et/ou démultiplexage sur au moins trois longueurs d'onde en une seule étape.

La présente invention a en outre pour second objectif de réaliser une fonction de filtrage optique d'au moins une longueur d'onde au moyen d'un premier coupleur asymétrique co-directionnel assisté par réseau auquel est ajouté au moins un autre coupleur, dit fictif, assisté par réseau de manière à augmenter le taux de réjection et à réduire la largeur de la bande passante de la réponse spectrale du premier coupleur du filtre.

En particulier, la présente invention propose une structure à trois guides d'onde optiques formés par trois rubans co-directionnels assurant un couplage évanescent bidirectionnel assisté par au moins un réseau et fonction de la longueur d'onde.

La présente invention a plus particulièrement pour objet un multiplexeur/démultiplexeur optique apte à combiner et/ou à séparer au moins deux signaux optiques parmi n se propageant à différentes longueurs d'onde, caractérisé en ce qu'il comprend au moins un guide d'onde central et deux guides d'onde latéraux, chaque guide d'onde latéral constituant avec le guide central une paire de guide d'onde, chaque paire étant disposée de manière à permettre un couplage évanescent bidirectionnel d'une longueur d'onde associée entre les guides de chaque paire et, le couplage étant sélectif en longueur d'onde et assisté par au moins un réseau gravé, lesdits guides d'onde étant conçus pour que le multiplexeur/démultiplexeur présente un fonctionnement indépendant de l'état de polarisation des signaux.

Selon un premier mode de réalisation, le guide d'onde central est gravé par un réseau de couplage, les guides d'onde latéraux étant dissymétriques de manière à coupler respectivement une première et une deuxième longueur d'onde.

Selon un deuxième mode de réalisation, chaque guide d'onde latéral est respectivement gravé par un premier et un deuxième réseau de couplage de manière à coupler respectivement une première et une deuxième longueur d'onde.

Selon un troisième mode de réalisation, les réseaux de couplage de chaque guide d'onde latéral sont identiques, les guides d'onde latéraux étant dissymétriques de manière à coupler respectivement une première et une deuxième longueur d'onde.

Selon une caractéristique essentielle de la présente invention, chaque guide d'onde présente la même biréfringence modale.

Selon une particularité de la présente invention, les deux longueurs d'onde couplées se propagent en sens inverse, la première étant combinée du premier guide latéral dans le guide central lorsque la deuxième est séparée des longueurs d'onde se propageant dans le guide central pour être couplée dans le deuxième guide de latéral, et réciproquement.

Selon un mode de réalisation particulier, les deux longueurs d'onde couplées respectivement par chaque guide latéral sont situées dans la même fenêtre de transmission optique.

Selon une autre caractéristique, chaque guide latéral présente une perturbation pondérée en sus de la gravure d'un réseau de couplage de manière à ce que le taux de réjection de la réponse spectrale de chaque coupleur du multiplexeur/démultiplexeur soit supérieure ou égale à 10 dB.

Avantageusement, la perturbation pondérée consiste dans une courbure des guides latéraux, par rapport au guide central rectiligne.

Préférentiellement, la distance entre le guide central et chaque guide latéral varie entre 2 et 5 μm.

Selon un mode de réalisation particulier de l'invention, le multiplexeur/démultiplexeur optique comprend un guide d'onde central et une pluralité de paires de guides d'onde latéraux, chaque paire de guides d'onde latéraux étant apte à coupler successivement deux longueurs d'onde ($\lambda_1$, $\lambda_2$).

L'invention a également pour objet un filtre optique comprenant au moins un multiplexeur/démultiplexeur selon l'invention.

Selon une caractéristique de ce filtre optique, une paire de guides d'ondes constitue un premier coupleur apte à coupler la longueur d'onde du signal à filtrer, le ou les autres paires de guide(s) d'onde constituant des coupleurs fictifs aptes à coupler une ou des longueur(s) d'onde de rejet, proche(s) de la longueur d'onde filtrée, de manière à augmenter le taux de réjection et à diminuer la largeur de la bande passante de la réponse spectrale du premier coupleur.

L'invention concerne en outre un transmetteur optique comprenant une pluralité de photo-diodes et une pluralité de photo-détecteurs, et comprenant en outre un multiplexeur/démultiplexeur selon l'invention.

L'invention s'applique particulièrement aux réseaux d'accès directs comprenant un Terminal de Ligne Optique et une pluralité de Terminaux de Réception Optique, des fibres optiques reliant ces derniers au premier, caractérisé en ce que chaque terminal comprend un transmetteur optique selon l'invention.

Selon un mode de réalisation particulier de l'invention, au moins trois signaux optiques se propagent entre le TLO et chaque TRO, un premier signal optique à 1.5 μm destiné à une distribution vidéo, et deux autres signau^x optiques à 1.3- μm et à 1.3+ μm destinés à une communication vocale bidirectionnelle.

Avantageusement, les signaux optiques à 1.3- μm et à 1.3+ μm sont respectivement couplés dans les guides d'ondes latéraux, le signal optique à 1.5 μm se propageant dans le guide d'onde central.

Préférentiellement, les signaux optiques destinés à la communication bidirectionnelle sont fixés à 1.28 μm et à 1.32 μm.

Le module optique selon l'invention présente l'avantage d'être simple à réaliser, et en particulier d'utiliser des techniques de fabrication connues.

Avantageusement, le même multiplexeur/démultiplexeur selon l'invention peut être utilisé dans le terminal de ligne optique TLO, et dans le terminal de réception optique TRO.

En effet, le multiplexeur/démultiplexeur optique selon l'invention peut facilement être intégré dans un composant monolithique avec des diodes lasers et des photo-détecteurs. Le même composant peut être placé dans le TLO ou les TRO, seule la disposition relative des différents éléments étant différentes.

L'utilisation de deux longueurs d'onde pour la transmission vocale à 1.3 μm permet d'améliorer le débit d'un facteur dix.

Il faut également noter qu'un tel concept de couplage peut facilement être étendu à d'autres fenêtres de transmission.

D'autres particularités et avantages de l'invention apparaîtront à la lecture de la description donnée à titre d'exemple illustratif et non limitatif et faite en référence aux figures annexées qui représentent :

- la figure 1, déjà décrite, est un diagramme schématique illustrant le principe de la télécommunication optique par FTTH ;
- la figure 2, déjà décrite, illustre schématiquement un coupleur co-directionnel connu dans l'état de l'art ;
- les figures 3a et 3b illustrent la réponse spectrale d'un coupleur classique respectivement selon le canal latéral et selon la canal direct ;
- la figure 4a illustre un profil de couplage ;
- la figure 4b illustre la réponse spectrale d'un coupleur avec le profil de la figure 4a ;
- la figure 5a illustre une réponse spectrale apodisée ;
- la figure 5b illustre une réponse spectrale idéale ;
- la figure 6 est un schéma d'un premier mode de réalisation du multiplexeur/démultiplexeur selon l'invention vu de dessus ;
- la figure 7 est un schéma d'un deuxième mode de réalisation du multiplexeur/démultiplexeur selon l'invention vu de dessus ;
- la figure 8 est un schéma en coupe transversale de la figure 6 ;
- la figure 9 est un schéma en coupe transversale de la figure 7 ;
- les figures 10a et 10b sont des réponses spectrales, respectivement du canal direct et d'un canal latéral d'un coupleur selon l'invention ;
- la figure 11 est une réponse spectrale expérimentale des coupleurs du multiplexeur/démultiplexeur selon la présente invention.
- la figure 12 est un schéma d'un troisième mode de réalisation du multiplexeur/démultiplexeur selon l'invention vu de dessus ;
- la figure 13 illustre une réponse spectrale du filtre optique selon l'invention ;
- la figure 14 est un schéma d'un premier mode de réalisation du filtre optique selon l'invention ;
- la figure 15 est un schéma d'un deuxième mode de réalisation du filtre optique selon l'invention ;
- la figure 16 est un schéma d'un troisième mode de réalisation du filtre optique selon l'invention ;
- la figure 17 est un schéma d'un quatrième mode de réalisation du multiplexeur/démultiplexeur selon l'invention vu de dessus ;
- la figure 18 est un schéma en coupe transversale de la figure 17.

Dans la description qui suit, on fait référence dans un premier temps à la mise en oeuvre du multiplexeur/démultiplexeur selon l'invention pour une fonction de multiplexage et/ou démultiplexage, en particulier dans le cadre de la télécommunication optique par FTTH.

Avantageusement, les mêmes multiplexeurs/démultiplexeurs optiques sont utilisés pour réaliser le transmetteur du Terminal de Ligne Optique TLO et ceux des Terminaux de Réception Optique TRO des clients.

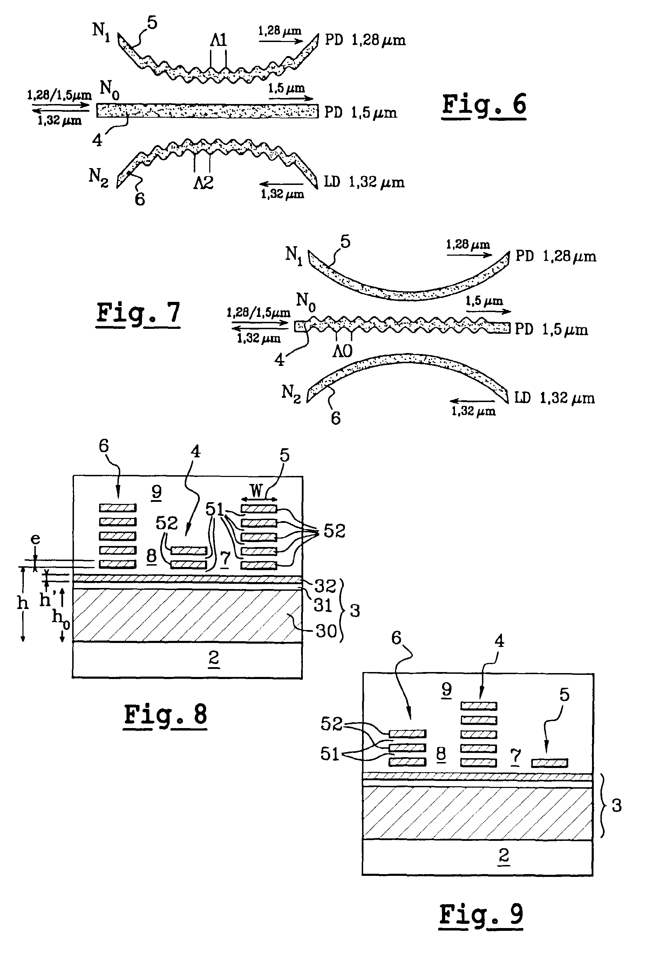

La figure 6 illustre un premier mode de réalisation du multiplexeur/démultiplexeur selon l'invention dans lequel le guide d'onde central 4 n'est pas gravé, alors que les guides latéraux sont respectivement gravés par des réseaux de couplage $\Lambda_1$ et $\Lambda_2$ pour coupler respectivement deux longueurs d'onde $\lambda_1$ et $\lambda_2$ prédéterminées.

Dans les exemples illustrés, on a fixé ces longueurs d'onde $\lambda_1$ et $\lambda_2$ à 1.28 µm et à 1.32 µm, ce qui correspond à l'application d'une communication vocale bidirectionnelle dans la fenêtre de transmission optique de 1.3 µm.

Selon l'exemple choisi, le TLO émet des signaux optiques à 1.28 µm et 1.5 µm descendants vers les TRO des clients. Le signal optique à 1.28 µm, émis par une diode laser du TLO est couplé par le réseau $\Lambda_1$ du guide d'onde latéral 5 dans le guide d'onde central 4.

Le TLO reçoit en outre un signal optique à 1.32 µm montant des TRO des clients. Ce signal est couplé par le réseau $\Lambda_2$ du guide d'onde central 4 vers le guide d'onde latéral 6 pour être dirigé vers le photo-détecteur à 1.32 µm.

En outre, chaque TRO reçoit des signaux optiques descendants à 1.28 µm et à 1.5 µm par le guide d'onde central. Le signal à 1.28 µm est couplé par le réseau $\Lambda_1$ du guide d'onde central 4 vers le guide d'onde latéral 5 pour être dirigé vers le photo-détecteur à 1.28 µm, alors que le signal à 1.5 µm n'est pas affecté par le réseau et poursuit sa propagation dans le guide d'onde central pour être interprété par le photo-détecteur à 1.5 µm.

De même, le signal optique montant à 1.32 µm, émis par la diode laser du TRO est couplé par le réseau $\Lambda_2$ du guide d'onde latéral 6 dans le guide d'onde central 4.

La dépendance des guides d'ondes latéraux à une longueur d'onde donnée est obtenue par une perturbation périodique reliée par une relation précise au réseau gravé.

Ainsi, avec $\lambda_1, \lambda_2$, les longueurs d'onde que l'on souhaite coupler (1.28 µm, et 1.32 µm),

$\Lambda_1, \Lambda_2$, le pas du réseau gravé respectivement pour 1.28 µm et pour 1.32 µm,
$N_0$, l'indice effectif de réfraction du guide central,
$N_1, N_2$, les indices effectif de réfraction de chaque guide latéral,

On obtient les relations suivantes :

$$\lambda_1 = \Lambda_1 (N_1 - N_0) \qquad (1)$$

$$\lambda_2 = \Lambda_2 (N_2 - N_0)$$

L'indépendance de chaque coupleur à la polarisation de l'onde destinée à être filtrée est obtenue lorsque :

$$\lambda_1^{TM} = \lambda_1^{TE} \qquad (2)$$

$$\lambda_2^{TM} = \lambda_2^{TE}$$

L'indépendance du multiplexeur/démultiplexeur selon l'invention à la polarisation de la lumière est donc donnée par la double relation :

$$N_1^{TE} - N_1^{TM} = N_2^{TE} - N_2^{TM} = N_0^{TE} - N_0^{TM} \qquad (3)$$

Cette relation impose que les vitesses de propagation des modes transverses électrique et magnétique des ondes lumineuses dans chacun des guides du multiplexeur/démultiplexeur soient égales. Cette condition est importante car les fibres optiques qui assurent la liaison entre le TLO et les TRO ne conservent pas la polarisation de la lumière.

Selon une particularité de l'invention, le fonctionnement du multiplexeur/ démultiplexeur est indépendant de l'état de polarisation des signaux transmis et/ou séparés. La réalisation de guides d'onde ayant la même biréfringence modale est connue et a déjà été mentionnée en référence à la figure 2.

Selon une variante de réalisation, l'indépendance de la polarisation des signaux peut être obtenue par une biréfringence nulle avec une géométrie particulière des guides d'onde (guides carrés ou circulaires) ou par des contraintes dans la structure des matériaux semiconducteurs constituant les guides d'ondes (désaccord de mailles par exemple).

On remarque en outre que les trois guides d'onde 4, 5 et 6 ne sont pas parallèles. En effet, si tel était le cas, le taux de réjection des coupleurs serait trop faible, environ 9 dB, et les longueurs d'ondes de la même fenêtre à 1.3 μm risqueraient d'être couplées dans le même canal.

Pour pallier ce risque, les rubans des guides d'ondes 5 et 6 présentent une courbure qui entraîne une perturbation pondérée qui améliore le taux de réjection.

Ainsi, la distance moyenne entre les guides latéraux et le guide central varie, par exemple, entre 2 μm et 5 μm. Cette perturbation pondérée supplémentaire permet d'obtenir un taux de réjection supérieure ou égale à 10 dB.

On remarque que les trois guides d'onde 4, 5 et 6 ne sont pas parallèles. En effet, si tel était le cas, le taux de réjection des coupleurs serait trop faible, environ 9 dB, et les longueurs d'ondes de la même fenêtre à 1.3 μm risqueraient d'être couplées dans le même canal.

Pour pallier ce risque, les rubans des guides d'ondes 5 et 6 présentent une courbure qui entraîne une perturbation pondérée qui améliore le taux de réjection.

Ainsi, la distance moyenne entre les guides latéraux et le guide central varie, par exemple, entre 2 μm et 5 μm. Cette perturbation pondérée supplémentaire permet d'obtenir un taux de réjection supérieure ou égale à 10 dB.

La figure 7 illustre un deuxième mode de réalisation du multiplexeur/démultiplexeur selon l'invention. Ce mode de réalisation constitue le dual du premier mode de réalisation précédemment décrit.

Selon ce deuxième mode de réalisation, le guide d'onde central est gravé par un réseau de couplage $\Lambda_0$, alors que les guides d'onde latéraux 5 et 6 ne sont pas gravés.

Néanmoins, afin d'assurer le couplage de deux signaux optiques différents, les guides latéraux sont dissymétriques, c'est à dire qu'ils présentent des indices effectifs $N_1$ et $N_2$ éloignés.

Cette dissymétrie sera exposée plus amplement en référence à la figure 9.

Le pas du réseau $\Lambda_0$ du guide d'onde central 4 et les indices $N_1$ et $N_2$ des guides d'onde latéraux 5 et 6 sont fixés pour permettre le couplage respectif des deux longueurs d'onde prédéterminées $\lambda_1$ et $\lambda_2$.

On a ainsi les relations :

$$\lambda_1 = \Lambda_0 (N_0 - N_1)$$

$$\lambda_2 = \Lambda_0 (N_0 - N_2)$$

avec la condition de biréfringence modale toujours respectée telle qu'elle a été définie précédemment.

Un troisième mode de réalisation du multiplexeur/démultiplexeur selon l'invention, non illustré, consiste en une variante du premier mode de réalisation.

Selon ce mode de réalisation, les pas des réseaux $\Lambda_1$ et $\Lambda_2$ des guides latéraux 5 et 6 sont identiques.

Le couplage des deux longueurs d'onde différentes $\lambda_1$ et $\lambda_2$ est alors obtenu par une dissymétrie des guides latéraux 5 et 6.

Cette dissymétrie est obtenue de la même manière que dans le deuxième mode de réalisation précédemment décrit.

On a ainsi :

$$\Lambda_1 = \Lambda_2 = \Lambda$$

et

$$\lambda_1 = \Lambda (N_1 - N_0)$$

$$\lambda_2 = \Lambda (N_2 - N_0)$$

avec la condition de biréfringence modale toujours respectée.

La description qui suit, en référence aux figures 8 et 9, reprend une technique similaire à celle du brevet N°2 732 478 précédemment mentionné, mais appliqué à un multiplexeur/démultiplexeur optique à trois guides d'onde.

Les figures 8 et 9 illustrent schématiquement une vue en coupe du multiplexeur/ démultiplexeur selon les premier et deuxième modes de réalisation de l'invention. Le module optique comporte un coeur et trois rubans gravés 4, 5 et 6 définissant trois guides optiques.

La description qui suit se réfère à un mode de réalisation particulier des coupleurs co-directionnels du multiplexeur/démultiplexeur selon l'invention dans lequel les guides d'onde sont réalisés sur un semiconducteur III-V.

Cette variante correspond à un mode de réalisation préférentiel car elle permet une intégration monolithique facile avec les autre composants d'un transmetteur tels que des photo-diodes et des photo-détecteurs, par exemple.

On peut néanmoins envisager de réaliser ces guides d'onde sur du silicium, sur du diélectrique, sur du Niobate de Lithium ou sur des polymères par exemple, et de réaliser ensuite une intégration des autres composants, lasers et photo-diodes, par hybridation.

Selon le mode de réalisation préférentiel sur matériau III-V, la structure à trois guides optiques comporte une couche de confinement inférieure 2 et un coeur 3 de guidage de la lumière, surmonté de trois rubans de charge 4, 5 et 6 destinés à confiner latéralement la lumière dans le coeur 3 et former trois guides optiques, parallèles, monomodes, plans et chargés. L'indice de réfraction effectif du coeur 3 est supérieur à celui de la couche de confinement inférieure 2 et à celui des rubans de charge 4, 5 et 6. Ces derniers et le coeur 3 sont recouverts par une couche de confinement supérieure 9, d'indice de réfraction inférieur à l'indice effectif du coeur et à celui des rubans de charge. Les rubans 4, 5 et 6 s'étendent longitudinalement et sont séparés par des gorges 7 et 8.

On réalise le coeur 3 et les rubans de charge 4, 5 et 6 par dépôt successif de couches minces alternées, les épaisseurs du coeur 3 et des rubans de charge 4, 5 et 6 vérifiant la relation (3) précitée traduisant l'égalité des biréfringences modales des guides optiques.

Dans un exemple de réalisation préféré de l'invention, les diverse couches sont déposées par épitaxie en phase vapeur (MOCVD). La couche de confinement inférieure 2 est constituée en matériau binaire InP et elle est réalisée sur un substrat plan. On dépose ensuite une couche massive 30 de matériau quaternaire InGaAsP, d'épaisseur $h_0$, puis une succession de couches minces alternées 31, 32 respectivement en matériau binaire InP et en matériau quaternaire InGaAsP, sur une épaisseur totale h'. Chaque couche mince 31 ou 32 présente une épaisseur e inférieure ou égale à 200 Å, ce qui permet de contrôler l'épaisseur totale $h = h_0 + h'$ de la couche de coeur 3 avec une précision de l'ordre de $\pm$ 100 Å. Le choix de l'épaisseur totale h dépend de la réponse spectrale souhaitée pour le filtre.

Après réalisation du coeur 3, on dépose par épitaxie une succession de couches minces alternées 51, 52 respectivement en matériau binaire InP et en matériau quaternaire InGaAsP. Chaque couche mince 51, 52 présente une épaisseur e inférieur ou égale à 200 Å. On réalise ensuite un masque et l'on grave par attaque sèche, de manière connue en soi, les rubans de charge 4, 5 et 6.

On obtient ainsi un multiplexeur/démultiplexeur optique à trois rubans 4, 5 et 6 séparés respectivement par des gorges 7 et 8.

Les guides optiques associés aux rubans et charge 4, 5 et 6 présentent des indices effectifs différents, respectivement égaux à $N_0$, $N_1$ et $N_2$ qui sont liés directement à la hauteur respective des rubans 4, 5 et 6.

Selon le premier mode de réalisation, illustré sur la figure 8, les rubans latéraux 5 et 6 sont gravés symétriques, c'est à dire qu'ils représentent le même nombre de couches minces 51 et 52 alternées, alors que le ruban central 4 est gravé avec une hauteur moindre.

Les rubans de charge 5 et 6 sont alors gravés latéralement pour former chacun un réseau de couplage de période $\Lambda_1$ et $\Lambda_2$ dans la direction longitudinale. Ils présentent une section transversale rectangulaire.

Les réseaux de couplage $\Lambda_1$ et $\Lambda_2$ sont gravés respectivement sur les rubans 5 et 6 par lithogravure ou tout autre moyen connu. Préférentiellement, le pas de chaque réseau est compris entre 100 et 150 µm.

Selon un mode de réalisation particulier, cité à titre d'exemple, la largeur des rubans 4, 5, et 6 varient de 1 à 2 µm, avec des valeurs préférentielles de 1.5 µm. La hauteur du ruban central peut par exemple être fixée à 0.08 µm, ce qui correspond à une succession de quatre couches d'épitaxies alternativement en matériaux binaire et quaternaire de 0.02 µm d'épaisseur, la hauteur des rubans latéraux étant avantageusement fixée à 0.24 µm, soit 12 couches successives.

La largeur des gorges 7 et 8 varie quant à elle de 2 µm à 5 µm, les rubans latéraux étant gravés de manière légèrement incurvés comme cela a été décrit en référence à la figure 3.

Selon le second mode de réalisation, illustré sur la figure 9, les trois rubans 4, 5 et 6 sont gravés dissymétriques, c'est à dire qu'ils présentent chacun un nombre différent de couches minces 51 et 52 alternées, et par conséquent une hauteur différente.

Le ruban central 4 est alors gravé latéralement pour former un réseau de couplage de période $\Lambda_0$ dans la direction longitudinale. Cette gravure est obtenue selon des techniques classiques, de lithogravure par exemple.

La dissymétrie entre les rubans latéraux 5 et 6 est indispensable pour permettre le couplage de deux longueurs d'onde différentes $\lambda_1$ et $\lambda_2$ dans chacun des guides latéraux 5 et 6.

En effet, cette dissymétrie entraîne une forte disparité entre $N_1$ et $N_2$, ce qui permet le couplage des longueurs d'onde prédéterminées $\lambda_1$ et $\lambda_2$ dans les guides latéraux 5 et 6 au moyen d'un seul réseau $\Lambda_0$ gravé sur le ruban central 4.

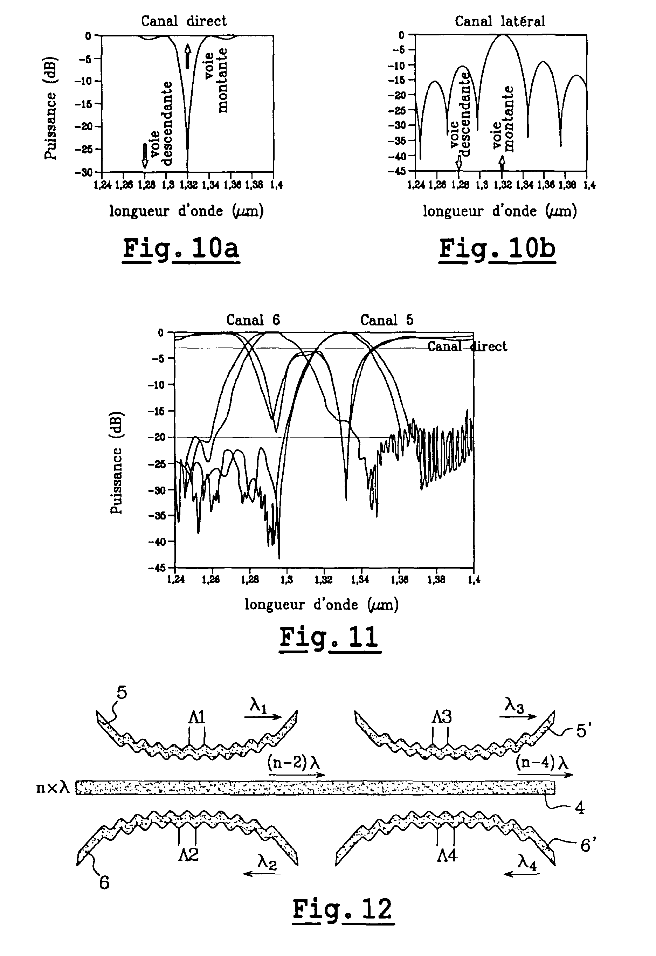

Les figures 10a, 10b et 11 illustrent les réponses spectrales obtenues par des coupleurs co-directionnels.

Les figures 10a et 10b illustrent des réponses spectrales simulées pour un filtre gravé asymétrique à deux guides d'onde.

Toutes les longueurs d'onde sauf celle devant être filtrée traversent le filtre dans le canal direct, alors que la longueur d'onde choisie est couplée dans le guide d'onde latéral et traverse le filtre dans le canal latéral.

L'exemple des figures 10a et 10b est donné pour un filtre gravé à 1.32 $\mu$m.

La figure 11 est une réponse spectrale obtenue expérimentalement par le double coupleur du multiplexeur/démultiplexeur selon l'invention.

Une telle réponse expérimentale montre d'une part que la condition de biréfringence modale est remplie, et d'autre part que le taux de réjection est suffisant pour permettre une bonne séparation des longueurs d'onde dans une même fenêtre de transmission optique.

La figure 12 illustre un mode de réalisation particulier de l'invention dans lequel une pluralité de multiplexeur/démultiplexeur selon l'invention sont placés en cascade de manière à combiner et/ou séparer 2xm longueurs d'onde différentes parmi n, m étant le nombre de multiplexeur/démultiplexeur placés en série.

Selon ce mode de réalisation, le multiplexeur/démultiplexeur comprend un unique guide central 4 et une pluralité de paires de guides d'onde latéraux 5, 5' et 6, 6', chaque paire étant apte à coupler deux longueurs d'onde différentes $\lambda_1$ et $\lambda_2$.

Dans la description qui suit, on fait maintenant référence à la mise en oeuvre du multiplexeur/démultiplexeur selon l'invention pour une fonction de filtrage optique.

La structure des guides d'onde restent la même que dans l'application au multiplexage et/ou démultiplexage précédemment décrite. Les fonctions respectives des coupleurs assistés par réseau sont simplement différentes, bien que similaires.

Le filtre optique selon l'invention est basé sur un coupleur assisté par réseau, tel que cela a été décrit dans le brevet français FR 2 732 478 en référence à la figure 2.

L'invention propose d'ajouter au moins un autre coupleur, dit fictif, constitué par au moins un troisième guide d'onde, dont la fonction est d'extraire une portion non voulue de la réponse spectrale du premier coupleur. L'ajout d'un tel guide d'onde fictif ne perturbe en rien le fonctionnement du premier coupleur. De cette manière, il devient possible de « tailler » la bande passante du premier coupleur, soit du côté des longueurs d'onde plus faibles, soit du côté des longueurs d'onde plus élevées, soit des deux côtés en ajoutant deux guides fictifs. Le ou les guide(s) fictifs sont en effet des coupleurs dont la bande passante est très proche du ou des lobe(s) secondaire(s) de la fonction de transfert du premier coupleur. Le but du ou des coupleur(s) fictif(s) est d'extraire la puissance optique couplée dans le premier coupleur de la fenêtre de transmission correspondant aux lobes secondaires de la fonction de transfert du premier couleur.

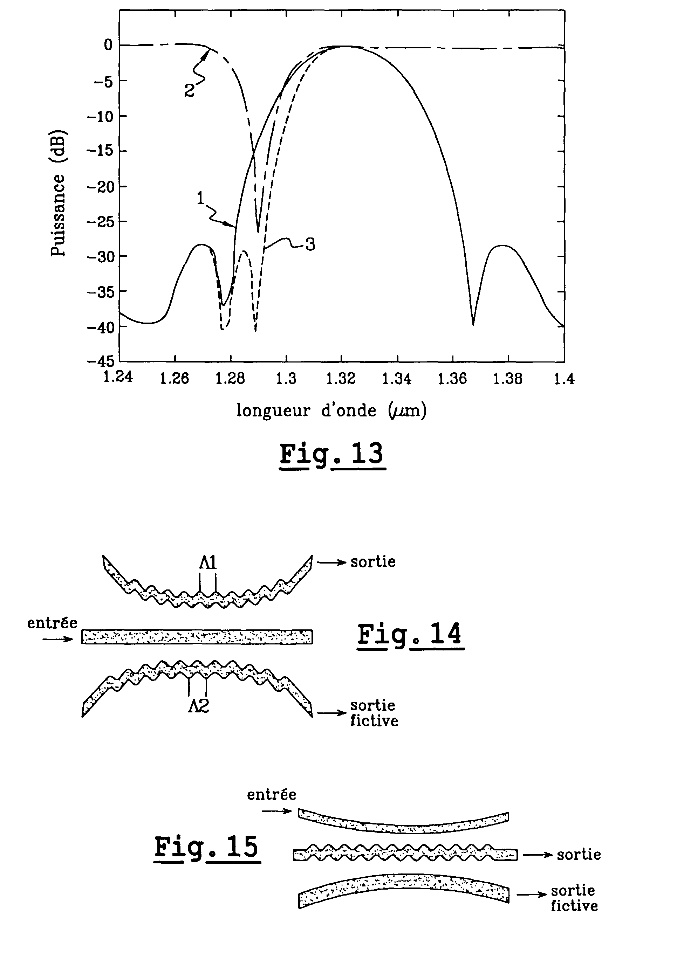

Cet objectif est illustré sur la figure 13 par le graphe de la réponse spectrale du filtre optique selon l'invention. La première courbe (trait plein) illustre la réponse spectrale sur le canal latéral d'un premier coupleur classique réglé à 1.32 $\mu$m, la deuxième courbe (pointillés longs) illustre la réponse spectrale sur le canal direct du coupleur fictif ajouté, et la troisième courbe (pointillés courts) représente la réponse spectrale sur le canal latéral du premier coupleur résultant de l'ajout du coupleur fictif.

La réponse spectrale obtenue (courbe 3) présente un taux de réjection de 30 à 40 dB et une largeur de bande passante réduite par rapport à celle du coupleur seul (courbe 1).

En première approximation, on peut considérer que l'on coupe de la réponse spectrale du canal latéral du premier coupleur une portion de spectre équivalent à la réponse spectrale du canal direct du coupleur fictif.

Dans une telle application à un filtre optique, le multiplexeur/démultiplexeur selon l'invention garde la même structure que celle décrite en référence aux figures 6 à 9.

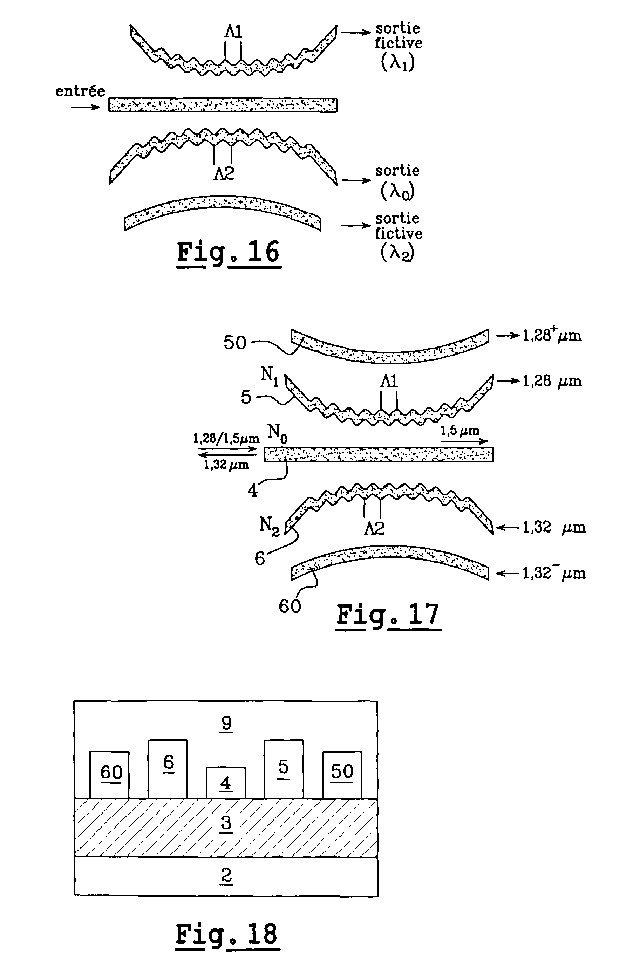

Selon les applications, le coupleur fictif peut être directement couplé au guide d'entrée (figure 14) ou au guide de sortie du premier coupleur (figure 15). Pour apodiser la réponse spectrale des deux côtés du spectre, deux coupleurs fictifs peuvent être utilisés, un couplé au guide d'entré et l'autre couplé au guide de sortie du premier coupleur (figure 16).

Des montages plus complexes utilisant plusieurs coupleurs fictifs placés en série et/ou en parallèle de coupleurs constituant des filtres optiques peuvent être envisagés.

Dans un mode de réalisation particulier du multiplexeur/démultiplexeur selon l'invention, les fonctions de multiplexage/démultiplexage et de filtrage optique peuvent être combinées, comme illustré sur les figures 17 et 18.

Trois guides d'ondes 4,5,6 permettent de séparer et/ou de combiner deux longueurs $\lambda_1$ et $\lambda_2$ pour un multiplexage/démultiplexage en longueur d'onde. Avantageusement deux autres guides d'ondes latéraux fictifs 50 et 60 peuvent être respectivement placés à l'extérieur des guides d'onde 5 et 6 afin de filtrer les longueurs d'onde extraites $\lambda_1$ et $\lambda_2$ par le multiplexeur/démultiplexeur de manière à apodiser les réponses spéctrales en extrayant les signaux non voulus.

Par exemple, le guide fictif 50 est réglé à $1{,}28^+\mu m$ $(1{,}32\mu m)$ afin d'ôter les portions de signal à cette longueur d'onde qui aurait été couplé dans le guide 5 réglé à $1{,}28\ \mu m$ pour augmenter le taux de réjection du guide 5, et inversement, le guide fictif 60 est réglé à $1{,}32^-\mu m$ $(1{,}28\mu m)$ .

## Revendications

1. Multiplexeur/Démultiplexeur optique apte à combiner et/ou à séparer au moins deux signaux optiques parmi n se propageant à différentes longueurs d'onde, caractérisé en ce qu'il comprend au moins un guide d'onde central (4) et deux guides d'onde latéraux (5, 6), chaque guide d'onde latéral (5 et 6) constituant avec le guide central (4) une paire de guide d'onde, chaque paire étant disposée de manière à permettre un couplage évanescent bidirectionnel d'une longueur d'onde associée entre les guides de chaque paire (4, 5) et (4, 6), le couplage étant sélectif en longueur d'onde et assisté par au moins un réseau gravé ($\Lambda$), lesdits guides d'onde (4, 5, 6) étant conçus pour que le multiplexeur/démultiplexeur présente un fonctionnement indépendant de l'état de polarisation des signaux.

2. Multiplexeur/Démultiplexeur optique selon la revendication 1, caractérisé en ce que le guide d'onde central (4) est gravé par un réseau ($\Lambda_0$) de couplage, les guides d'onde latéraux (5, 6) étant dissymétriques de manière à coupler respectivement une première et une deuxième longueur d'onde ($\lambda_1$, $\lambda_2$).

3. Multiplexeur/Démultiplexeur optique selon la revendication 1, caractérisé en ce que chaque guide d'onde latéral (5, 6) est respectivement gravé par un premier et un deuxième réseau ($\Lambda_1$, $\Lambda_2$) de couplage de manière à coupler respectivement une première et une deuxième longueur d'onde ($\lambda_1$, $\lambda_2$).

4. Multiplexeur/Démultiplexeur optique selon la revendication 3, caractérisé en ce que les réseaux ($\Lambda_1$, $\Lambda_2$) de couplage sont identiques, les guides d'onde latéraux étant dissymétriques de manière à coupler respectivement une première et une deuxième longueur d'onde ($\lambda_1$, $\lambda_2$).

5. Multiplexeur/Démultiplexeur optique selon l'une quelconque des revendications précédentes, caractérisé en ce que chaque guide d'onde (4, 5, 6) présente la même biréfringence modale.

6. Multiplexeur/Démultiplexeur optique selon l'une quelconque des revendications précédentes, caractérisé en ce que les deux longueurs d'onde ($\lambda_1$, $\lambda_2$) couplées respectivement par chaque guide latéral (5, 6) sont situées dans la même fenêtre de transmission optique.

7. Multiplexeur/Démultiplexeur optique selon l'une quelconque des revendications précédentes, caractérisé en ce que chaque guide latéral (5, 6) présente une perturbation pondérée en sus de la gravure d'un réseau ($\Lambda_1$, $\Lambda_2$) de couplage de manière à ce que le taux de réjection de la réponse spectrale de chaque coupleur du multiplexeur/démultiplexeur soit supérieure ou égale à 10 dB.

8. Multiplexeur/Démultiplexeur optique selon la revendication 7, caractérisé en ce que la perturbation pondérée consiste dans une courbure des guides latéraux (5, 6), par rapport au guide central (4) rectiligne.

9. Multiplexeur/Démultiplexeur optique selon la revendication 8, caractérisé en ce que la distance entre le guide central (4) et chaque guide latéral (5, 6) varie entre 2 et 5 $\mu m$.

10. Multiplexeur/Démultiplexeur optique selon l'une quelconque des revendications 1 à 9, caractérisé en ce que les deux longueurs d'onde couplées ($\lambda_1$, $\lambda_2$) se propagent en sens inverse, la première ($\lambda_1$) étant combinée du premier guide latéral (5) dans le guide central (4) lorsque la deuxième ($\lambda_2$) est séparée des longueurs d'onde se propageant dans le guide central (4) pour être couplée dans le deuxième guide latéral (6), et réciproquement.

11. Multiplexeur/Démultiplexeur optique selon l'une quelconque des revendications précédentes, caractérisé en ce qu'il comprend un guide d'onde central (4) et une pluralité de paires de guides d'onde latéraux (5, 6), chaque paire de guides d'onde latéraux étant apte à coupler successivement deux longueurs d'onde ($\lambda_1$, $\lambda_2$).

12. Filtre optique, caractérisé en ce qu'il comprend au moins un multiplexeur/démultiplexeur selon l'une quelconque des revendications 1 à 11.

13. Filtre optique selon la revendication 12, caractérisé en ce qu'une paire de guides d'onde constitue un premier coupleur apte à coupler la longueur d'onde ($\lambda_1$) du signal à filtrer, le ou les autres paires de guide(s) d'onde constituant un ou des coupleur(s) fictif(s) apte(s) à coupler une ou des longueur(s) d'onde ($\lambda_2$) de rejet, proche (s) de la longueur d'onde filtrée, de manière à augmenter le taux de réjection et à réduire la largeur de la bande passante de la réponse spectrale du premier coupleur.

**14.** Transmetteur optique comprenant un pluralité de sources lumineuses et de photo-détecteurs, caractérisé en ce qu'il comprend en outre un multiplexeur/démultiplexeur selon l'une quelconque des revendications 1 à 11.

**15.** Réseau d'accès direct comprenant un Terminal de Ligne Optique (TLO) et une pluralité de Terminaux de Réception Optique (TRO), des fibres optiques reliant ces derniers (TRO) au premier (TLO), caractérisé en ce que chaque terminal (TRO, TLO) comprend un transmetteur optique selon la revendication 14.

**16.** Réseau d'accès selon la revendication 15, caractérisé en ce qu'au moins trois signaux optiques se propagent entre le Terminal de Ligne Optique (TLO) et chaque Terminal de Réception Optique (TRO), un premier signal optique à 1.5 µm destiné à une distribution vidéo à haut débit, et deux autres signaux optiques à 1.3- µm et à 1.3+ µm destinés à une communication vocale bidirectionnelle.

**17.** Réseau d'accès selon la revendication 16, caractérisé en ce que les signaux optiques à 1.3- µm ($\lambda_1$) et à 1.3+ µm ($\lambda_2$) sont respectivement couplés dans les guides d'onde latéraux (5, 6), le signal optique à 1.5 µm se propageant dans le guide d'onde central (4).

**18.** Réseau d'accès selon l'une des revendications 15 à 17, caractérisé en ce que les signaux optiques destinés à la communication vocale bidirectionnelle sont fixés à 1.28 µm ($\lambda_1$) et à 1.32 µm ($\lambda_2$).

## Fig. 1

## Fig. 2

Canal latéral

**Fig. 3a**

Canal direct

**Fig. 4a**

**Fig. 4a**

**Fig. 4b**

Q=40%

**Fig. 5a**

Q=100%

**Fig. 5b**

$N_1$
5
$\Lambda 1$
1,28 $\mu$m ⟶ PD 1,28 $\mu$m

1,28/1,5 $\mu$m ⟶
⟵ 1,32 $\mu$m
$N_0$
4
1,5 $\mu$m ⟶ PD 1,5 $\mu$m

$N_2$
$\Lambda 2$
6
1,32 $\mu$m ⟵ LD 1,32 $\mu$m

## Fig. 6

## Fig. 7

5
$N_1$
1,28 $\mu$m ⟶ PD 1,28 $\mu$m

1,28/1,5 $\mu$m ⟶
⟵ 1,32 $\mu$m
$N_0$
4
$\Lambda 0$
1,5 $\mu$m ⟶ PD 1,5 $\mu$m

$N_2$
6
1,32 $\mu$m ⟵ LD 1,32 $\mu$m

6    4    5

9    W

52    51    52

$e$    $\underline{8}$    $\underline{7}$

$h$    $h'$    $h_0$

32
31  } 3
30

$\underline{2}$

## Fig. 8

6    4

9

52
51
$\underline{8}$    5    $\underline{7}$

3

$\underline{2}$

## Fig. 9

Canal direct

Puissance (dB)

voie descendante    voie montante

longueur d'onde (μm)

**Fig. 10a**

Canal latéral

voie descendante    voie montante

longueur d'onde (μm)

**Fig. 10b**

Canal 6    Canal 5

Canal direct

Puissance (dB)

longueur d'onde (μm)

**Fig. 11**

$\Lambda 1$    $\lambda_1$    $\Lambda 3$    $\lambda_3$    5'

$(n-2)\lambda$    $(n-4)\lambda$

$n \times \lambda$    4

$\Lambda 2$    $\lambda_2$    $\Lambda 4$    $\lambda_4$    6'

6

**Fig. 12**

**Fig. 13**

**Fig. 14**

**Fig. 15**

$\Lambda 1$

→ sortie fictive $(\lambda_1)$

entrée →

→ sortie $(\lambda_0)$

$\Lambda 2$

→ sortie fictive $(\lambda_2)$

**Fig. 16**

50

→ $1,28^+ \mu m$

$N_1$

$\Lambda 1$

→ $1,28 \mu m$

5

$1,28/1,5 \mu m$ →
← $1,32 \mu m$

$N_0$

$1,5 \mu m$ →

4

$N_2$

$\Lambda 2$

← $1,32 \mu m$

6

60

← $1,32^- \mu m$

**Fig. 17**

9

60  6  4  5  50

3

2

**Fig. 18**

Office européen
des brevets

**RAPPORT DE RECHERCHE EUROPEENNE**

Numéro de la demande

EP 00 40 1555

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 502 783 A (WU CHI)<br>26 mars 1996 (1996-03-26)<br>* abrégé; figure 3 *<br>* colonne 4, ligne 15 - ligne 24 *<br>* colonne 4, ligne 61 - colonne 5, ligne 54 *<br>* colonne 8, ligne 10 - ligne 50 * | 1-6,9-15 | G02B6/293 |
| A | | 7,8 | |
| A | US 4 756 587 A (SANO HIROHISA ET AL)<br>12 juillet 1988 (1988-07-12)<br>* abrégé; figures 1A,6B *<br>* colonne 1, ligne 59 - colonne 2, ligne 27 * | 1,12,14,<br>15 | |
| A | EP 0 518 570 A (FUJITSU LTD)<br>16 décembre 1992 (1992-12-16)<br>* abrégé; figure 5 *<br>* colonne 3, ligne 8 - ligne 31 *<br>* colonne 5, ligne 10 - ligne 23 * | 1-18 | |
| A,D | FR 2 732 478 A (FRANCOIS SANDRINE)<br>4 octobre 1996 (1996-10-04)<br>* abrégé; figure 2 * | 1,5,9,<br>12,14,15 | **DOMAINES TECHNIQUES RECHERCHES (Int.Cl.7)**<br>G02B<br>H04J |
| A | US 5 202 780 A (FUSSAENGER KURT)<br>13 avril 1993 (1993-04-13)<br>* abrégé *<br>* colonne 4, ligne 60 - colonne 5, ligne 52 * | 1,6,<br>12-18 | |

Le présent rapport a été établi pour toutes les revendications

| Lieu de la recherche | Date d'achèvement de la recherche | Examinateur |
|---|---|---|
| LA HAYE | 30 août 2000 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**            EP 00 40 1555

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-08-2000

| Document brevet cité au rapport de recherche | | Date de publication | Membre(s) de la famille de brevet(s) | | Date de publication |
|---|---|---|---|---|---|
| US 5502783 | A | 26-03-1996 | CA | 2194778 A | 29-02-1996 |
| | | | WO | 9606372 A | 29-02-1996 |
| | | | DE | 69512252 D | 21-10-1999 |
| | | | DE | 69512252 T | 30-12-1999 |
| | | | EP | 0776491 A | 04-06-1997 |
| | | | JP | 2869819 B | 10-03-1999 |
| | | | JP | 9508723 T | 02-09-1997 |
| US 4756587 | A | 12-07-1988 | JP | 2531634 B | 04-09-1996 |
| | | | JP | 63049708 A | 02-03-1988 |
| | | | DE | 3787598 D | 04-11-1993 |
| | | | DE | 3787598 T | 11-05-1994 |
| | | | EP | 0256388 A | 24-02-1988 |
| EP 0518570 | A | 16-12-1992 | JP | 4359205 A | 11-12-1992 |
| | | | CA | 2070602 A,C | 07-12-1992 |
| | | | DE | 69221952 D | 09-10-1997 |
| | | | US | 5496390 A | 05-03-1996 |
| FR 2732478 | A | 04-10-1996 | EP | 0735389 A | 02-10-1996 |
| US 5202780 | A | 13-04-1993 | DE | 3913300 A | 25-10-1990 |
| | | | AU | 616112 B | 17-10-1991 |
| | | | AU | 5313590 A | 25-10-1990 |
| | | | EP | 0394728 A | 31-10-1990 |

EPO FORM P0460

Pour tout renseignement concernant cette annexe : voir Journal Officiel de l'Office européen des brevets, No.12/82